# EUROPÄISCHE PATENTSCHRIFT

(11) **EP 3 322 538 B1**
(45) Veröffentlichungstag und Bekanntmachung des Hinweises auf die Patenterteilung: **18.12.2019**
(21) Anmeldenummer: 16735577.5
(22) Anmeldetag: 01.07.2016
(51) Int. Cl.: B05B 3/10, B05B 3/00, B05B 13/04, B25J 19/00, F24H 9/18

(54) **BESCHICHTUNGSANLAGE UND ENTSPRECHENDES BETRIEBSVERFAHREN**
COATING SYSTEM AND CORRESPONDING COATING METHOD
UNITÉ DE REVÊTEMENT ET MÉTHODE DE REVÊTEMENT CORRESPONDANTE

(30) Priorität: 15.07.2015 DE 102015009214
(43) Veröffentlichungstag der Anmeldung: 23.05.2018
(73) Patentinhaber: Dürr Systems AG, 74321 Bietigheim-Bissingen (DE)
(72) Erfinder: IMLE, Matthias, 74385 Pleidelsheim (DE)
(74) Vertreter: v. Bezold & Partner Patentanwälte - PartG mbB
(86) Internationale Anmeldenummer: PCT/EP2016/001129
(87) Internationale Veröffentlichungsnummer: WO 2017/008888

(56) Entgegenhaltungen:
- EP-A1- 1 393 816
- DE-A1-102007 030 724
- US-A1- 2007 176 019

## Beschreibung

Die Erfindung betrifft eine Beschichtungsanlage zur Beschichtung von Bauteilen, insbesondere in Form einer Lackieranlage zur Lackierung von Kraftfahrzeugkarosseriebauteilen. Weiterhin betrifft die Erfindung ein entsprechendes Betriebsverfahren für eine solche Beschichtungsanlage.

In modernen Lackieranlagen zur Lackierung von Kraftfahrzeugkarosseriebauteilen werden als Applikationsgerät üblicherweise Rotationszerstäuber eingesetzt, die mittels eines rotierenden Glockentellers einen Sprühstrahl des zu applizierenden Lacks abgeben, was an sich aus dem Stand der Technik bekannt ist. Der mechanische Antrieb des rotierenden Glockentellers erfolgt üblicherweise durch eine Druckluftturbine, die in dem Rotationszerstäuber angeordnet ist und von Druckluft angetrieben wird.

Problematisch hierbei ist die Tatsache, dass die Druckluft in der Druckluftturbine expandiert und dadurch abkühlt, was zu einer störenden Kondenswasserbildung in der Druckluftturbine führen kann.

Zur Lösung dieses Problems ist es aus dem Stand der Technik bekannt, die Druckluft vor der Zuführung zu der Druckluftturbine zu erwärmen, beispielsweise mittels einer elektrischen Heizung. Nachteilig an dieser Problemlösung sind jedoch die zusätzlichen Investitionskosten für die elektrische Heizung und die Betriebskosten für den Betrieb der elektrischen Heizung, da hierfür elektrische Energie bereitgestellt werden muss.

Bei den bekannten Lackieranlagen zur Lackierung von Kraftfahrzeugkarosseriebauteilen werden die Rotationszerstäuber üblicherweise durch mehrachsige Lackierroboter geführt, wobei die Lackierroboter von Roboterantrieben angetrieben werden, die üblicherweise einen Elektromotor und ein Getriebe umfassen.

Problematisch an derartigen Roboterantrieben ist die Tatsache, dass in den Elektromotoren und in den Getrieben unerwünschte Abwärme entsteht, die abgeführt werden muss, um ein übermäßiges Ansteigen der Betriebstemperatur zu verhindern. Das Abführen der Abwärme von den Roboterantrieben ist jedoch schwierig, weil derartige Roboterantriebe üblicherweise in einer explosionsgeschützten Kapselung untergebracht sind, wobei die Kapselung nicht nur den erwünschten Effekt hat, dass ein Austreten von Zündfunken in die explosionsgefährdete Lackierkabine verhindert wird. Vielmehr erschwert die Kapselung der Roboterantriebe auch die Abfuhr der unerwünschten Abwärme von den Roboterantrieben.

Aus DE 10 2013 006 334 A1 ist eine Lackieranlage bekannt, bei der die als Nebenprodukt des Betriebs von pneumatischen Pumpen entstehende Kälte eingesetzt wird, um eine erwärmungsempfindliche Beschichtungsanlagenkomponente (z.B. "Railhouse") zu kühlen. Diese Druckschrift offenbart also lediglich eine Kühleinrichtung und ein entsprechendes Kühlverfahren.

Ferner ist zum Stand der Technik hinzuweisen auf DE 39 07 437 A1, DE 195 36 626 A1 und US 2006/0261192 A1.

Zum allgemeinen technischen Hintergrund der Erfindung ist hinzuweisen auf EP 1 393 816 A.

Schließlich offenbaren US 2007/0176019 A1 und DE 10 2007 030 724 A1 eine Beschichtungsanlage gemäß dem Oberbegriff von Anspruch 1 und ein entsprechendes Betriebsverfahren gemäß dem Oberbegriff von Anspruch 11.

Hierbei wird jedoch die Abwärme eines Antriebsmotors eines Rotationszerstäubers genutzt, um Lenkluft zu erwärmen. Dies ist jedoch in der Praxis nur bei einem elektrischen Antriebsmotor für den Rotationszerstäuber möglich. In der Praxis werden jedoch zum Antrieb von Rotationszerstäubern meist keine Elektromotoren eingesetzt.

Der Erfindung liegt deshalb die Aufgabe zugrunde, eine entsprechend verbesserte Beschichtungsanlage und ein entsprechendes Betriebsverfahren zu schaffen.

Diese Aufgabe wird durch eine Beschichtungsanlage bzw. ein Betriebsverfahren gemäß den Nebenansprüchen gelöst.

Die Erfindung umfasst die allgemeine technische Lehre, die Abwärme von Roboterantrieben zur Erwärmung von Prozessmedien (z. B. Druckluft) eines Rotationszerstäubers zu nutzen. Dadurch lassen sich im Rahmen der Erfindung zwei Probleme lösen. Zum einen werden dadurch die Roboterantriebe gekühlt, weil die Abwärme der Roboterantriebe abgeführt wird. Zum anderen kann durch die Nutzung der Abwärme der Roboterantriebe auf eine elektrische Heizung zur Erwärmung der Prozessmedien verzichtet werden, wodurch die Investitionskosten und die Betriebskosten der Beschichtungsanlage verringert werden können.

Die erfindungsgemäße Beschichtungsanlage weist also zunächst eine erste Beschichtungsanlagenkomponente auf, die im Betrieb als Nebenprodukt Abwärme produziert und somit eine Wärmequelle bildet. Bei dieser ersten Beschichtungsanlagenkomponente handelt es sich um einen Roboterantrieb, der Abwärme produziert, wie bereits vorstehend beispielhaft erwähnt wurde, oder um ein teil eines Roboterantriebs.

Der im Rahmen der Erfindung verwendete Begriff einer Abwärme erzeugenden ersten Beschichtungsanlagenkomponente ist zu unterscheiden von der eingangs erwähnten herkömmlichen Heizung zur Erwärmung der Antriebsluft des Rotationszerstäubers, die zwar auch Abwärme produziert, aber ansonsten keine Funktionen in der Beschichtungsanlage erfüllt. Der Begriff der Abwärme erzeugenden ersten Beschichtungsanlagenkomponente stellt also auf einen Roboterantrieb oder ein Teil davon ab, die zusätzlich zur Heizfunktion eine weitere Funktion (Antrieb eines Lackierroboters) in der Beschichtungsanlage erfüllen und die Abwärme lediglich als Nebenprodukt erzeugen.

Darüber hinaus umfasst die erfindungsgemäße Beschichtungsanlage eine zweite Beschichtungsanlagenkomponente, die im Betrieb erwärmt werden muss und somit eine Wärmesenke bildet. In einem bevorzugten Ausführungsbeispiel der Erfindung handelt es sich bei dieser zweiten Beschichtungsanlagenkomponente um eine Druckluftturbine, deren Zuluft erwärmt wird, um eine Kondenswasserbildung in der Druckluftturbine zu vermeiden.

Die Erfindung ist jedoch hinsichtlich der zu erwärmenden zweiten Beschichtungsanlagenkomponente nicht auf eine Druckluftturbine beschränkt. Beispielsweise besteht im Rahmen der Erfindung auch die Möglichkeit, dass Lenkluft erwärmt wird, die von dem Rotationszerstäuber abgegeben wird, um den Sprühstrahl des Rotationszerstäubers zu formen, wobei Lenklüfte an sich aus dem Stand der Technik bekannt sind und deshalb nicht weiter beschrieben werden müssen.

Die Erfindung zeichnet sich nun dadurch aus, dass die bisher ungenützte Abwärme der ersten Beschichtungsanlagenkomponente (z. B. Roboterantrieb) der zweiten Beschichtungsanlagenkomponente (z. B. Druckluftturbine bzw. Zuluft der Druckluftturbine) zugeführt wird, um diese zu erwärmen.

In dem bevorzugten Ausführungsbeispiel der Erfindung ist ein Wärmetauscher vorgesehen, der die Abwärme der ersten Beschichtungsanlagenkomponente (z. B. Roboterantrieb) aufnimmt und der zweiten Beschichtungsanlagenkomponente (z. B. Antriebsluft für Druckluftturbine) zuführt.

Vorzugsweise ist der Wärmetauscher auf seiner Warmseite mit der Abwärme erzeugenden ersten Beschichtungsanlagenkomponente (z. B. Roboterantrieb) verbunden und gibt die aufgenommene Abwärme auf seiner Kaltseite an einen gasförmigen oder flüssigen Stoffstrom (z. B. Druckluftstrom) ab. Der Wärmeübergang von der Abwärme erzeugenden ersten Beschichtungsanlagenkomponente (z. B. Rotationszerstäuber) auf den Wärmetauscher erfolgt also vorzugsweise vorrangig oder ausschließlich durch Wärmeleitung. Der Wärmeübergang von dem Wärmetauscher auf den Stoffstrom (z. B. Antriebsluft) an der Kaltseite des Wärmetauschers erfolgt dagegen vorzugsweise durch Wärmeleitung und Konvektion.

Weiterhin ist zu erwähnen, dass die zu erwärmende zweite Beschichtungsanlagenkomponente (z. B. Rotationszerstäuber) vorzugsweise mit einem flüssigen oder gasförmigen Prozessmedium (z. B. Druckluft) arbeitet. Beispielsweise verwenden herkömmliche Rotationszerstäuber Druckluft als Antriebsluft zum Antrieb der Druckluftturbine, als Lenkluft zur Formung des Sprühstrahls und als Lagerluft zur Lagerung der Glockentellerwelle in der Druckluftturbine. Im Rahmen der Erfindung kann dann die Abwärme der ersten Beschichtungsanlagenkomponente (z. B. Roboterantrieb) genutzt werden, um das Prozessmedium (z. B. Antriebsluft, Lenkluft) der zweiten Beschichtungsanlagenkomponente (z. B. Rotationszerstäuber) zu erwärmen. Das zu erwärmende Prozessmedium durchströmt hierzu vorzugsweise zunächst den Wärmetauscher und wird dann im erwärmten Zustand der zweiten Beschichtungsanlagenkomponente (z. B. Rotationszerstäuber) zugeführt.

Es wurde bereits vorstehend kurz erwähnt, dass es sich bei der Abwärme erzeugenden ersten Beschichtungsanlagenkomponente um einen Roboterantrieb oder ein Teil davon handelt, der einen Roboter (z. B. Lackierroboter, Handhabungsroboter) der Beschichtungsanlage mechanisch antreibt. Derartige Roboterantriebe weisen üblicherweise einen Elektromotor und ein Getriebe auf, die im Betrieb beide Abwärme erzeugen, die im Rahmen der Erfindung genutzt werden kann.

In dem bevorzugten Ausführungsbeispiel der Erfindung ist zwischen dem Motor und dem Getriebe ein Kühlflansch angeordnet, der die Abwärme von dem Motor und/oder von dem Getriebe abführt und dadurch den Roboterantrieb kühlt. Der Kühlflansch ist hierbei thermisch mit dem Motor und/oder mit dem Getriebe verbunden und führt die Abwärme von dem Motor und/oder von dem Getriebe ab, insbesondere durch den Wärmetauscher, der in dem Kühlflansch integriert sein kann. Hierbei ist es vorteilhaft, wenn der Kühlflansch einerseits mit dem Getriebe und andererseits mit dem Motor verbunden ist, da auf diese Weise ein guter Wärmekontakt zu dem Motor und zu dem Getriebe hergestellt wird.

In dem bevorzugten Ausführungsbeispiel der Erfindung weist der Kühlflansch zwei Gehäuseteile auf, die im montierten Zustand aufeinanderliegen und einen Gehäuseinnenraum dichtend einschließen. Die beiden Gehäuseteile weisen dann vorzugsweise jeweils eine zylindrische Bohrung auf, durch den die Abtriebswelle des Motors bzw. die Antriebswelle des Getriebes durchgeführt werden kann, wobei die Bohrungen gegenüber dem Gehäuseinnenraum abgedichtet sind. Der Kühlflansch weist vorzugsweise einen Einlass und einen Auslass auf, wobei das zu erwärmende Prozessmedium (z. B. Druckluft) durch den Einlass in den Gehäuseinnenraum eingeleitet und durch den Auslass wieder aus dem Gehäuseinnenraum ausgeleitet wird.

Im Betrieb erwärmt sich dieser Kühlflansch durch Wärmeübergang von Getriebe und dem Motor, wobei die Wärme von der Innenwand des Kühlflanschs auf das Prozessmedium (z. B. Druckluft) in dem Gehäuseinnenraum übergeht. Es ist deshalb wünschenswert, einen möglichst guten Wärmeübergang von der Innenwand des Kühlflanschs auf das Prozessmedium (z. B. Druckluft) in dem Gehäuseinnenraum zu ermöglichen. Hierzu weist der Kühlflansch innen vorzugsweise mindestens eine Rippe auf, die in den Gehäuseinnenraum hineinragt und dadurch die Kontaktfläche zwischen dem Kühlflansch einerseits und dem Prozessmedium andererseits vergrößert, was den Wärmeübergang erleichtert. In dem bevorzugten Ausführungsbeispiel weist der Kühlflansch in dem Gehäuseinnenraum zahlreiche Rippen auf, um den Wärmeübergang zu verbessern.

Darüber hinaus sind die Rippen und der Einlass und der Auslass vorzugsweise so angeordnet, dass das Prozessmedium zwischen dem Einlass und dem Auslass des Kühlflanschs eine ringförmige Strömung ausbildet, die um die Bohrung für die Antriebswelle bzw. Abtriebswelle herum verläuft. Dadurch wird erreicht, dass sich das Prozessmedium relativ lange in dem Gehäuseinnenraum aufhält, was ebenfalls zu einer guten Erwärmung des Prozessmediums (z. B. Druckluft) in dem Kühlflansch beiträgt.

Es wurde bereits vorstehend kurz erwähnt, dass die erfindungsgemäße Beschichtungsanlage mindestens einen Roboter (z. B. Lackierroboter, Handhabungsroboter) aufweist, wobei die Abwärme des zugehörigen Roboterantriebs ausgenutzt wird, um die zweite Beschichtungsanlagenkomponente (z. B. Druckluft für Druckluftturbine) zu erwärmen. Vorzugsweise umfasst ein solcher Roboter eine feststehende oder entlang einer Verfahrachse verschiebbare Roboterbasis, ein drehbares Roboterglied, einen schwenkbaren proximalen Roboterarm (in der Fachsprache auch als "Arm 1" bezeichnet), einen schwenkbaren distalen Roboterarm (in der Fachsprache auch als "Arm 2" bezeichnet) und eine mehrachsige Roboterhandachse, was an sich aus dem Stand der Technik bekannt ist. Der Abwärme liefernde Roboterantrieb mit Motor und Getriebe kann hierbei beispielsweise in der Roboterbasis oder in dem drehbaren Roboterglied montiert sein.

Es wurde bereits eingangs zum Stand der Technik erwähnt, dass der Roboterantrieb eines Lackierroboters in einer Kapselung eingekapselt sein kann, was aus Explosionsschutzgründen erforderlich sein kann, da in der Lackierkabine eine explosionsgefährdete Atmosphäre entstehen kann. Die Kapselung des Roboterantriebs kann also als druckfeste Kapselung, als Überdruckkapselung oder als Ölkapselung gemäß DIN ISO 60079 ausgebildet sein. Im Rahmen der Erfindung ist in diesem Zusammenhang zu erwähnen, dass das zu erwärmende Prozessmedium (z. B. Druckluft) in die Kapselung eingeleitet, dann innerhalb der Kapselung erwärmt und schließlich wieder aus der Kapselung ausgeleitet wird. Hierbei ist es vorteilhaft, wenn die Einleitung des Prozessmediums in die Kapselung und die Ausleitung des Prozessmediums aus der Kapselung den Explosionsschutz der Kapselung nicht beeinträchtigt und ebenfalls den gesetzlichen Anforderungen an einen Explosionsschutz erfüllt, insbesondere den Anforderungen gemäß DIN EN ISO 60079.

Es wurde bereits vorstehend kurz erwähnt, dass die Ausnutzung der Abwärme des Roboterantriebs für die Erwärmung der Druckluft einen zusätzlichen Erhitzer entbehrlich macht, wodurch die Investitions- und Betriebskosten der Beschichtungsanlage verringert werden können. Es ist jedoch im Rahmen der Erfindung auch möglich, dass zusätzlich ein elektrischer Erhitzer verwendet wird, der beispielsweise zum Einsatz kommen kann, wenn der Roboterantrieb zu Betriebsbeginn noch nicht genügend Abwärme liefert.

Schließlich ist zu erwähnen, dass die Erfindung auch ein entsprechendes Betriebsverfahren umfasst, wie es sich bereits aus der vorstehenden Beschreibung ergibt, sodass auf eine separate Beschreibung des Betriebsverfahrens verzichtet werden kann.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert. Es zeigen:
- Figur 1: eine schematische Darstellung einer erfindungsgemäßen Lackieranlage, bei der die Abwärme eines Roboterantriebs zur Erwärmung der Druckluft für den Rotationszerstäuber verwendet wird,
- Figur 2: eine Perspektivansicht eines erfindungsgemäßen Lackierroboters mit einem Wärmetauscher in dem drehbaren Roboterglied, sowie
- Figur 3: eine vereinfachte Darstellung eines Gehäuseteils des Kühlflansches zwischen dem Elektromotor und dem Getriebe gemäß Figur 1.

Die Zeichnungen zeigen verschiedene Ansichten einer erfindungsgemäßen Lackieranlage zur Lackierung von Kraftfahrzeugkarosseriebauteilen.

So weist die Lackieranlage einen Rotationszerstäuber 1 auf, der mittels eines rotierenden Glockentellers 2 einen Sprühstrahl 3 des zu applizierenden Lacks abgibt, was an sich aus dem Stand der Technik bekannt ist.

Zur Formung des Sprühstrahls 3 kann der Rotationszerstäuber einen Lenkluftstrahl 4 von hinten auf den Sprühstrahl 3 abgeben, was an sich aus dem Stand der Technik ebenfalls bekannt ist.

Der Antrieb des rotierenden Glockentellers 2 erfolgt in herkömmlicher Weise durch eine Druckluftturbine 5 in dem Rotationszerstäuber 1.

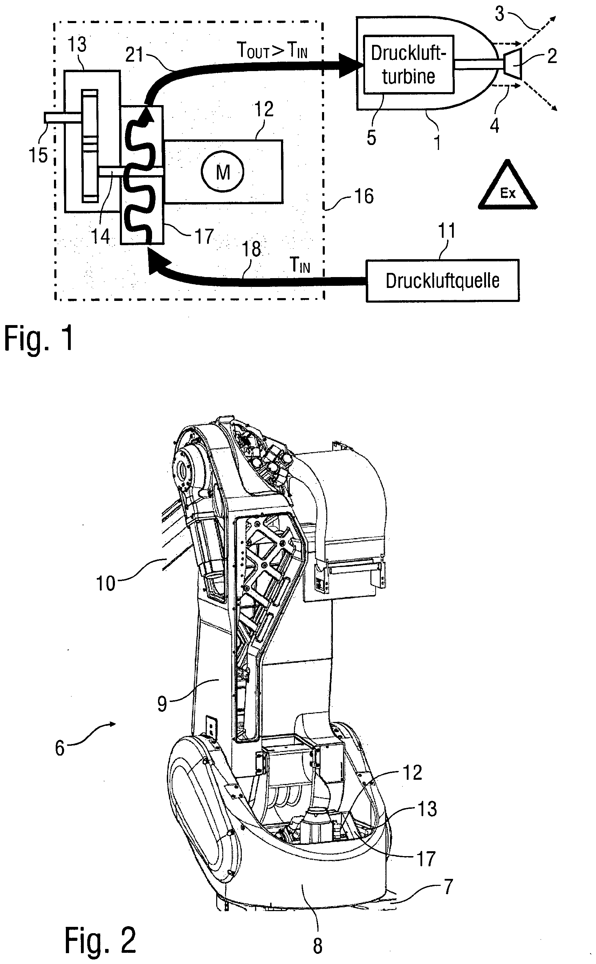

Der Rotationszerstäuber 1 wird in herkömmlicher Weise von einem mehrachsigen Lackierroboter 6 geführt, der in Figur 2 dargestellt ist. Der Lackierroboter 6 umfasst eine feststehende oder entlang einer Verfahrachse verfahrbare Roboterbasis 7, ein drehbares Roboterglied 8, einen proximalen Roboterarm 9 und einen distalen Roboterarm 10, wobei ein solcher Aufbau aus dem Stand der Technik an sich bekannt ist und deshalb nicht näher beschrieben wird.

Hierbei ist zu erwähnen, dass der Lackierroboter 6 mit dem Rotationszerstäuber 1 in einer Lackierkabine angeordnet ist, sodass der Kabineninnenraum der Lackierkabine einen explosionsgefährdeten Bereich bildet, wie in Figur 1 durch das übliche Warnsymbol dargestellt ist.

Der Antrieb der Druckluftturbine 5 in dem Rotationszerstäuber 1 erfolgt durch eine Druckluftquelle 11, welche die notwendige Druckluft bereitstellt.

In Figur 1 ist weiterhin dargestellt, dass der mechanische Antrieb des Lackierroboters 6 durch einen Roboterantrieb erfolgt, der einen Elektromotor 12 und ein Getriebe 13 umfasst. Der Elektromotor 12 weist hierbei eine Abtriebswelle 14 auf, die mit dem Getriebe 13 verbunden ist, wobei das Getriebe 13 seinerzeit eine Abtriebswelle 15 aufweist.

Hierbei ist zu erwähnen, dass der Elektromotor 12 grundsätzlich die Gefahr birgt, dass durch Funkenflug die explosionsgefährdete Atmosphäre in der Lackierkabine entzündet wird. Der gesamte Roboterantrieb mit dem Elektromotor 12 und dem Getriebe 13 ist deshalb in einer Explosionsschutzkapselung 16 angeordnet, wobei die Explosionsschutzkapselung 16 den Normanforderungen gemäß DIN ISO 60079 genügt.

Zwischen dem Elektromotor 12 und dem Getriebe 13 ist hierbei ein Kühlflansch 17 angeordnet, der die Aufgabe hat, die an sich störende Abwärme des Elektromotors 12 und des Getriebes 13 abzuführen, um eine übermäßige Erwärmung des Roboterantriebs zu verhindern. Hierzu ist die Druckluftquelle 11 über eine Druckluftleitung 18 mit einem Einlass 19 des Kühlflanschs 17 verbunden. Die Druckluft von der Druckluftquelle 11 wird also zunächst durch die Druckluftleitung 18 in den Kühlflansch 17 eingeleitet, wobei die zugeführte Druckluft eine Temperatur T_{IN} aufweist. Die zugeführte Druckluft wird dann in dem Kühlflansch 17 von der Abwärme des Elektromotors 12 und des Getriebes 13 erwärmt und verlässt den Kühlflansch 17 wieder über einen Auslass 20. Die erwärmte Druckluft wird dann über eine Druckluftleitung 21 dem Rotationszerstäuber 1 zugeführt, wobei die erwärmte Druckluft in der Druckluftleitung 21 eine Temperatur T_{OUT}>T_{IN} aufweist.

Hierbei ist zu erwähnen, dass der Kühlflansch 17 zwischen dem Elektromotor 12 und dem Getriebe 13 angeordnet ist und deshalb sowohl von dem Getriebe 13 als auch von dem Elektromotor 12 erwärmt wird. Die Anordnung des Kühlflanschs 17 zwischen dem Elektromotor 12 und dem Getriebe 13 führt vorteilhaft auch zu einem guten Wärmeübergang zwischen dem Kühlflansch 17 einerseits und dem Elektromotor 12 bzw. dem Getriebe 13 andererseits.

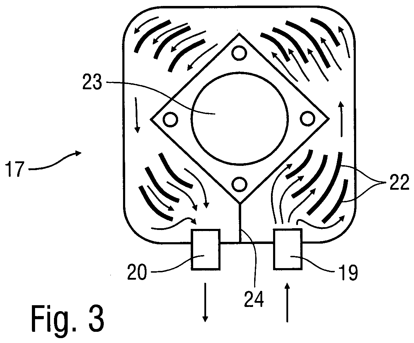

Darüber hinaus zeigt Figur 3, dass sich in dem Kühlflansch 17 zahlreiche Rippen 22 befinden, die von der Innenwand des Kühlflanschs 17 in den Gehäuseinnenraum hineinragen.

Zum einen führen die Rippen 22 zu einer Vergrößerung der Kontaktfläche zwischen der Innenwand des Kühlflanschs 17 einerseits und der in dem Gehäuseinnenraum befindlichen, zu erwärmenden Druckluft andererseits, was zu einem guten Wärmeübergang beiträgt.

Zum anderen erzwingen die Rippen 22 in dem Gehäuseinnenraum des Kühlflanschs 17 aber auch eine ringförmige Strömung, die in der Zeichnung gemäß Figur 3 entgegen dem Uhrzeigersinn ausgerichtet ist und von dem Einlass 19 um eine Bohrung 23 zu dem Auslass 20 führt. Diese ringförmige Strömung in dem Gehäuseinnenraum des Kühlflanschs 17 stellt sicher, dass die Druckluft für eine ausreichend lange Zeit in dem Kühlflansch 17 verbleibt und deshalb hinreichend stark erwärmt wird.

Zu der Bohrung 23 in dem Kühlflansch 17 ist zu erwähnen, dass diese zur Durchführung der Abtriebswelle 14 des Elektromotors 12 dient, wobei die Bohrung 23 gegenüber dem Gehäuseinnenraum des Kühlflanschs 17 abgedichtet wird.

Dem Rotationszerstäuber 1 wird also erwärmte Druckluft zugeführt, die zum Antrieb der Druckluftturbine 5 oder zur Abgabe des Lenkluftstrahls 4 verwendet werden kann. Die Erwärmung der zugeführten Druckluft verhindert hierbei vorteilhaft eine störende Kondenswasserbildung in dem Rotationszerstäuber 1.

Ferner zeigt Figur 3 eine optionale Trennwand 24 zwischen dem Einlass 19 und dem Auslass 20, wobei die Trennwand 24 die Strömungsrichtung zwischen dem Einlass 19 und dem Auslass 20 festlegt. Hierbei ist zu bemerken, dass die Trennwand 24 optional ist, d. h. die Trennwand 24 ist für die Funktion der Erfindung nicht zwingend erforderlich.

Schließlich ist aus Figur 2 ersichtlich, dass der Elektromotor 12, das Getriebe 13 und der Kühlflansch 17 in dem drehbaren Roboterglied 8 montiert sind.

Die Erfindung ist nicht auf das vorstehend beschriebene bevorzugte Ausführungsbeispiel beschränkt. Vielmehr ist eine Vielzahl von Varianten und Abwandlungen möglich, die in den Schutzbereich der beilegenden Patentansprüche fallen.

### Bezugszeichenliste:

- 1: Rotationszerstäuber
- 2: Glockenteller
- 3: Sprühstrahl
- 4: Lenkluftstrahl
- 5: Druckluftturbine
- 6: Lackierroboter
- 7: Roboterbasis
- 8: Drehbares Roboterglied
- 9: Proximaler Roboterarm
- 10: Distaler Roboterarm
- 11: Druckluftquelle
- 12: Elektromotor
- 13: Getriebe
- 14: Abtriebswelle des Elektromotors
- 15: Abtriebswelle des Getriebes
- 16: Explosionsschutzkapselung
- 17: Kühlflansch
- 18: Druckluftleitung
- 19: Einlass des Kühlflanschs
- 20: Auslass des Kühlflanschs
- 21: Druckluftleitung
- 22: Rippen
- 23: Bohrung zur Durchführung der Abtriebswelle des Elektromotors
- 24: Trennwand
- T_{IN}: Drucklufttemperatur am Einlass des Kühlflanschs
- T_{OUT}: Drucklufttemperatur am Auslass des Kühlflanschs

## Patentansprüche

1. Beschichtungsanlage, insbesondere Lackieranlage, zur Beschichtung von Bauteilen, insbesondere von Kraftfahrzeugkarosseriebauteilen, mit einem Beschichtungsmittel, insbesondere mit einem Lack, mit
a) einer ersten Beschichtungsanlagenkomponente (12, 13), die im Betrieb als Nebenprodukt Abwärme produziert und eine Wärmequelle bildet und
b) einer zweiten Beschichtungsanlagenkomponente (1, 5), die im Betrieb erwärmt wird und eine Wärmesenke bildet,
c) wobei die Abwärme der ersten Beschichtungsanlagenkomponente (12, 13) der zweiten Beschichtungsanlagenkomponente (1, 5) zur Erwärmung zugeführt wird,
**dadurch gekennzeichnet,**
d) dass die die Abwärme liefernde erste Beschichtungsanlagenkomponente (12, 13) ein Roboterantrieb eines Roboters (6) der Beschichtungsanlage oder ein Teil eines Roboterantriebs ist, insbesondere eines Lackierroboters (6) oder eines Handhabungsroboters der Beschichtungsanlage.

2. Beschichtungsanlage nach Anspruch 1,
**dadurch gekennzeichnet,**
a) **dass** ein Wärmetauscher (17) vorgesehen ist, der die Abwärme der ersten Beschichtungsanlagenkomponente (12, 13) aufnimmt und der zweiten Beschichtungsanlagenkomponente (1, 5) zugeführt, und
b) **dass** der Wärmetauscher (17) auf seiner Warmseite mit der Abwärme erzeugenden ersten Beschichtungsanlagenkomponente (12, 13) verbunden ist und die aufgenommene Abwärme auf seiner Kaltseite an einen gasförmigen oder flüssigen Stoffstrom abgibt.

3. Beschichtungsanlagen nach Anspruch 2, **dadurch gekennzeichnet,**
a) **dass** die zu erwärmende zweite Beschichtungsanlagenkomponente (1, 5) mit einem flüssigen oder gasförmigen Prozessmedium arbeitet, insbesondere mit Druckluft, und
b) **dass** die Abwärme der ersten Beschichtungsanlagenkomponente (12, 13) das Prozessmedium der zweiten Beschichtungsanlagenkomponente (1, 5) erwärmt,
c) **dass** das Prozessmedium vorzugsweise zunächst den Wärmetauscher (17) durchströmt und dann der zweiten Beschichtungsanlagenkomponente (1, 5) zugeführt wird.

4. Beschichtungsanlage nach einem der vorhergehenden Ansprüche, **dadurch gekennzeichnet, dass** der die Abwärme liefernde Teil des Roboterantriebs (12, 13) einen Motor (12) und/oder ein Getriebe (13) des Roboterantriebs (12, 13) umfasst.

5. Beschichtungsanlage nach Anspruch 4, **dadurch gekennzeichnet, dass** der Roboterantrieb (12, 13) folgendes aufweist:
a) einen Motor (12), insbesondere einen Elektromotor (12),
b) ein Getriebe (13), das antriebsseitig von dem Motor (12) angetrieben wird und abtriebsseitig den Roboter (6) mechanisch antreibt, und
c) einen Kühlflansch (17) zur Abfuhr der Abwärme von dem Motor und/oder dem Getriebe, wobei der Kühlflansch (17)
c1) zwischen dem Motor und dem Getriebe angeordnet ist,
c2) thermisch mit dem Motor und/oder dem Getriebe verbunden ist, und
c3) die Abwärme von dem Motor und/oder dem Getriebe abführt.

6. Beschichtungsanlage nach Anspruch 3 und Anspruch 5, **dadurch gekennzeichnet,**
a) **dass** der Kühlflansch (17) zwei Gehäuseteile aufweist, die im montierten Zustand aufeinander liegen und einen Gehäuseinnenraum dichtend einschließen oder dass der Kühlflansch (17) einteilig ist, und
b) **dass** die beiden Gehäuseteile jeweils eine zylindrische Bohrung (23) zur Durchführung einer Welle des Motors (12) oder des Getriebes (13) aufweisen, wobei die beiden Bohrungen (23) im montierten Zustand koaxial ausgerichtet und gegenüber dem Gehäuseinnenraum abgedichtet ist, und
c) **dass** der Kühlflansch (17) einen Einlass (19) aufweist, um das zu erwärmende Prozessmedium in den Gehäuseinnenraum einzuleiten, und
d) **dass** der Kühlflansch (17) einen Auslass (20) aufweist, um das erwärmte Prozessmedium aus dem Gehäuseinnenraum auszuleiten, und
e) **dass** der Kühlflansch (17) innen mindestens eine Rippe (22) aufweist, die in den Gehäuseinnenraum hineinragt, um den Wärmekontakt zwischen dem Kühlflansch (17) einerseits und dem Prozessmedium in dem Gehäuseinnenraum andererseits zu verbessern, und
f) **dass** das Prozessmedium zwischen dem Einlass (19) und dem Auslass (20) von den Rippen (22) um die Bohrungen (23) herum geleitet wird, so dass sich in dem Gehäuseinnenraum eine ringförmige Strömung des Prozessmediums um die Bohrungen (23) ausbildet, und
g) **dass** der Kühlflansch (17) eine Trennwand (24) aufweist, die zwischen dem Einlass (19) und dem Auslass (20) angeordnet ist.

7. Beschichtungsanlage nach einem der vorhergehenden Ansprüche, **dadurch gekennzeichnet,**
a) **dass** die zweite Beschichtungsanlagenkomponente (1) ein Rotationszerstäuber (1) ist, der einen Sprühstrahl (3) des Beschichtungsmittels abgibt,
b) **dass** die Abwärme der ersten Beschichtungsanlagenkomponente (12, 13) Druckluft erwärmt, die einer Druckluftturbine (5) des Rotationszerstäubers (1) zugeführt wird, um Kondenswasserbildung in der Druckluftturbine (5) zu vermeiden, und/oder
c) **dass** die Abwärme der ersten Beschichtungsanlagenkomponente (12, 13) Lenkluft erwärmt, die dem Rotationszerstäuber (1) zugeführt wird und die der Rotationszerstäuber (1) zur Formung des Sprühstrahls (3) abgibt.

8. Beschichtungsanlage nach Anspruch 2 oder nach einem der Ansprüche 3 bis 7 wenn abhängig vom Anspruch 2, **dadurch gekennzeichnet,**
a) **dass** der Roboter (6) mit einer Roboterbasis (7), einem drehbaren Roboterglied (8), einem proximalen Roboterarm (9) und einem distalen Roboterarm (10) vorgesehen ist, und
b) **dass** die Abwärme liefernde erste Beschichtungsanlagenkomponente (12, 13) und/oder der Wärmetauscher (17) in der Roboterbasis (7) oder in dem drehbaren Roboterglied (8) montiert sind.

9. Beschichtungsanlage nach Anspruch 2 und entweder nach Anspruch 3 oder nach einem der Ansprüche 4 bis 8, wenn abhängig vom Anspruch 3, **dadurch gekennzeichnet,**
a) **dass** die Abwärme liefernde erste Beschichtungsanlagenkomponente (12, 13), die zweite Beschichtungsanlagenkomponente (1, 5) und/oder der Wärmetauscher (17) in einer Kapselung (16) eingekapselt sind, und
b) **dass** die Kapselung (16) eine Explosionsschutzkapselung (16) ist, insbesondere eine druckfeste Kapselung, eine Überdruckkapselung oder eine Ölkapselung gemäß DIN ISO 60079, und
c) **dass** das zu erwärmende Prozessmedium in die Kapselung (16) eingeleitet, dann innerhalb der Kapselung (16) erwärmt und schließlich wieder aus der Kapselung (16) ausgeleitet wird, und
d) **dass** die Einleitung des Prozessmediums in die Kapselung (16) und die Ausleitung des Prozessmediums aus der Kapselung (16) den Anforderungen an eine Explosionsschutzkapselung genügt, insbesondere gemäß DIN ISO 60079.

10. Beschichtungsanlage nach einem der vorhergehenden Ansprüche, **dadurch gekennzeichnet,**
a) **dass** die Erwärmung der zweiten Beschichtungsanlagenkomponente (1, 5) ohne einen zusätzlichen Erhitzer ausschließlich durch die Abwärme der ersten Beschichtungsanlagenkomponente erfolgt, oder
b) **dass** zur Erwärmung der zweiten Beschichtungsanlagenkomponente (1, 5) zusätzlich ein Erhitzer vorgesehen ist, insbesondere ein elektrischer Lufterhitzer.

11. Betriebsverfahren für eine Beschichtungsanlage, insbesondere für eine Lackieranlage, zur Beschichtung von Bauteilen, insbesondere von Kraftfahrzeugkarosseriebauteilen, mit einem Beschichtungsmittel, insbesondere mit einem Lack, mit den folgenden Schritten:
a) Betrieb einer ersten Beschichtungsanlagenkomponente (12, 13), wobei die erste Beschichtungsanlagenkomponente (12, 13) als Nebenprodukt Abwärme erzeugt,
b) Betrieb einer zweiten Beschichtungsanlagenkomponente (1, 5), wobei der zweiten Beschichtungsanlagenkomponente (1, 5) Wärme zugeführt wird,
c) Zuführung der Abwärme der ersten Beschichtungsanlagenkomponente (12, 13) zu der zweiten Beschichtungsanlagenkomponente (1, 5) zur Erwärmung der zweiten Beschichtungsanlagenkomponente (1, 5),
**dadurch gekennzeichnet,**
d) dass die die Abwärme liefernde erste Beschichtungsanlagenkomponente (12, 13) ein Roboterantrieb eines Roboters (6) der Beschichtungsanlage oder ein Teil eines Roboterantriebs ist, insbesondere eines Lackierroboters (6) oder eines Handhabungsroboters der Beschichtungsanlage.

## Claims

1. Coating system, in particular painting installation, for coating components, in particular motor vehicle body components, with a coating agent, in particular with a paint, with
a) a first coating system component (12, 13) which in operation produces waste heat as a by-product and forms a heat source, and
b) a second coating system component (1, 5) which is heated during operation and forms a heat sink,
c) wherein the waste heat of the first coating system component (12, 13) is supplied to the second coating system component (1, 5) for heating,
**characterized in**
d) that the first coating system component (12, 13) supplying the waste heat is a robot drive of a robot (6) of the coating system or a part of a robot drive, in particular of a painting robot (6) or a handling robot of the coating system.

2. Coating system according to claim 1,
**characterized in**
a) **that** a heat exchanger (17) is provided which receives the waste heat of the first coating system component (12, 13) and supplies it to the second coating system component (1, 5), and
b) **that** the heat exchanger (17) is connected on its hot side to the first coating system component (12, 13) which generates waste heat and delivers the received waste heat on its cold side to a gaseous or liquid material flow.

3. Coating system according to claim 2,
**characterized in**
a) **that** the second coating system component (1, 5) to be heated operates with a liquid or gaseous process medium, in particular with compressed air, and
b) **that** the waste heat of the first coating system components (12, 13) heats the process medium of the second coating system component (1, 5),
c) **that** the process medium preferably first flows through the heat exchanger (17) and is then fed to the second coating system component (1, 5).

4. Coating system according to one of the preceding claims, **characterized in that** the part of the robot drive (12, 13) supplying the waste heat comprises a motor (12) and/or a gear (13) of the robot drive (12, 13).

5. Coating system according to claim 4, **characterized in that** the robot drive (12, 13) comprises the following:
a) a motor (12), in particular an electric motor (12),
b) a transmission (13) which is driven on the drive side by the motor (12) and mechanically drives the robot (6) on the output side, and
c) a cooling flange (17) for dissipating the waste heat from the motor and/or the transmission, the cooling flange (17)
c1) is located between the motor and the transmission,
c2) is thermally connected to the motor and/or transmission; and
c3) dissipates the waste heat from the motor and/or transmission.

6. Coating system according to claim 3 and claim 5, **characterized in**
a) **that** the cooling flange (17) has two housing parts which, in the assembled state, lie one on top of the other and enclose a housing interior in a sealing manner, or in that the cooling flange (17) is a one-piece part, and
b) **that** the two housing parts each have a cylindrical bore (23) for passing a shaft of the motor (12) or of the transmission (13) through, the two bores (23) being coaxially aligned in the assembled state and being sealed with respect to the housing interior space, and
c) **that** the cooling flange (17) has an inlet (19) for introducing the process medium to be heated into the housing interior, and
d) **that** the cooling flange (17) has an outlet (20) for discharging the heated process medium from the enclosure interior, and
e) **that** the cooling flange (17) has inside at least one rib (22) which projects into the housing interior space in order to improve the thermal contact between the cooling flange (17) on the one hand and the process medium in the housing interior space on the other hand, and
f) **that** the process medium is conducted between the inlet (19) and the outlet (20) by the ribs (22) around the bores (23) so that an annular flow of the process medium around the bores (23) is formed in the housing interior, and
g) **that** the cooling flange (17) comprises a partition wall (24) disposed between the inlet (19) and the outlet (20) .

7. Coating system according to one of the preceding claims, **characterized in**
a) **that** the second coating system component (1) is a rotary atomizer (1) which emits a spray jet (3) of the coating medium,
b) **that** the waste heat of the first coating system components (12, 13) heats compressed air which is supplied to a compressed air turbine (5) of the rotary atomiser (1) in order to avoid condensation in the compressed air turbine (5), and/or
c) **that** the waste heat of the first coating system components (12, 13) heats steering air which is fed to the rotary atomiser (1) and which the rotary atomiser (1) delivers for shaping the spray jet (3).

8. Coating system according to claim 2 or according to any of claims 3 to 7 if dependent on claim 2, **characterized in**
a) **that** the robot (6) is provided with a robot base (7), a rotatable robot member (8), a proximal robot arm (9) and a distal robot arm (10), and
b) **that** the first coating system component (12, 13) supplying waste heat and/or the heat exchanger (17) are mounted in the robot base (7) or in the rotatable robot member (8).

9. Coating system according to claim 2 and either according to claim 3 or according to one of claims 4 to 8, if dependent on claim 3, **characterized in**
a) **that** the first coating system component (12, 13) supplying waste heat, the second coating system component (1, 5) and/or the heat exchanger (17) are encapsulated in an encapsulation (16), and
b) **that** the encapsulation (16) is an explosion protection encapsulation (16), in particular a flameproof encapsulation, an overpressure encapsulation or an oil encapsulation in accordance with DIN ISO 60079, and
c) n that the process medium to be heated is introduced into the encapsulation (16), then heated within the encapsulation (16) and finally discharged from the encapsulation (16) again, and
d) **that** the introduction of the process medium into the encapsulation (16) and the discharge of the process medium from the encapsulation (16) meet the requirements for an explosion protection encapsulation, in particular in accordance with DIN ISO 60079.

10. Coating system according to one of the preceding requirements, **characterized in**
a) **that** the heating of the second coating system component (1, 5) without an additional heater is carried out exclusively by the waste heat of the first coating system component, or
b) **that** a heater, in particular an electric air heater, is additionally provided for heating the second coating system component (1, 5).

11. Operating method for a coating system, in particular for a painting installation, for coating components, in particular motor vehicle body components, with a coating agent, in particular with a paint, comprising the following steps:
a) Operation of a first coating system component (12, 13), the first coating system component (12, 13) generating waste heat as a by-product,
b) operation of a second coating system component (1, 5), wherein heat is supplied to the second coating system component (1, 5),
c) supplying the waste heat of the first coating system component (12, 13) to the second coating system component (1, 5) for heating the second coating system component (1, 5),
**characterized in**
d) that the first coating system component (12, 13) supplying the waste heat is a robot drive of a robot (6) of the coating system or a part of a robot drive, in particular of a painting robot (6) or a handling robot of the coating system.

## Revendications

1. Installation de revêtement, plus particulièrement installation de peinture, pour le revêtement de composants, plus particulièrement de composants de s de véhicules automobiles, avec un produit de revêtement, plus particulièrement avec une peinture, avec
a) un premier composant d'installation de revêtement (12, 13), qui dégage de la chaleur en tant que sous-produit lors du fonctionnement et qui constitue une source de chaleur et
b) un deuxième composant d'installation de revêtement (1, 5) qui est chauffé lors du fonctionnement et qui constitue un puits de chaleur,
c) la chaleur dégagée par le premier composant d'installation de revêtement (12, 13) étant introduite dans le deuxième composant d'installation de revêtement (1, 5) pour le chauffer,
**caractérisée en ce que**
d) le premier composant d'installation de revêtement (12, 13) fournissant la chaleur est un entraînement de robot d'un robot (6) de l'installation de revêtement ou une partie d'un entraînement de robot, plus particulièrement d'un robot de peinture (6) ou d'un robot de manipulation de l'installation de revêtement.

2. Installation de revêtement selon la revendication 1,
**caractérisée en ce que**
a) un échangeur thermique (17) est prévu, qui absorbe la chaleur dégagée par le premier composant d'installation de revêtement (12, 13) et l'introduit dans le deuxième composant d'installation de revêtement (1, 5) et
b) l'échangeur thermique (17) est relié, sur son côté chaud, avec le premier composant d'installation de revêtement (12, 13) générant la chaleur et dissipe la chaleur absorbée sur son côté froid dans un flux de matière gazeuse ou liquide.

3. Installation de revêtement selon la revendication 2, **caractérisée en ce que**
a) le deuxième composant d'installation de revêtement (1, 5) à chauffer fonctionne avec un milieu de process liquide ou gazeux, plus particulièrement avec de l'air comprimé et
b) la chaleur dégagée par le premier composant d'installation de revêtement (12, 13) chauffe le milieu de process du deuxième composant d'installation de revêtement (1, 5),
c) le milieu de process traverse, de préférence, d'abord l'échangeur thermique (17) puis est introduit dans le deuxième composant d'installation de revêtement (1, 5).

4. Installation de revêtement selon l'une des revendications précédentes, **caractérisée en ce que** la partie fournissant la chaleur de l'entraînement de robot (12, 13) comprend un moteur (12) et/ou une transmission (13) de l'entraînement de robot (12, 13).

5. Installation de revêtement selon la revendication 4, **caractérisée en ce que** l'entraînement de robot (12, 13) comprend ce qui suit :
a) un moteur (12), plus particulièrement un moteur électrique (12),
b) une transmission (13), qui est entraîné, du côté de l'entraînement, par le moteur (12) et entraîne mécaniquement, côté sortie, le robot (6) et
c) une bride de refroidissement (17) pour l'évacuation de la chaleur dégagée par le moteur et/ou la transmission, la bride de refroidissement (17)
c1) étant disposée entre le moteur et la transmission,
c2) étant reliée thermiquement avec le moteur et/ou la transmission,
c3) évacuant la chaleur dégagée par le moteur et/ou la transmission.

6. Installation de revêtement selon la revendication 3 et la revendication 5, **caractérisée en ce que**
a) la bride de refroidissement (17) comprend deux parties de boîtier qui, dans l'état monté, s'appuient l'une contre l'autre et forment, de manière étanche un intérieur de boîtier ou **en ce que** la bride de refroidissement (17) est constituée d'une seule pièce et
b) les deux parties de boîtier comprennent chacune un alésage cylindrique (23) pour le passage d'un arbre du moteur (12) ou de la transmission (13), les deux alésages (23) étant orientés, dans l'état monté, de manière coaxiale et étanchéifiés par rapport à l'intérieur du boîtier et
c) la bride de refroidissement (17) comprend une entrée (19) afin d'introduire le milieu de process à chauffer à l'intérieur du boîtier et
d) la bride de refroidissement (17) comprend une sortie (20) afin d'évacuer le milieu de process à chauffer hors de l'intérieur du boîtier et
e) la bride de refroidissement (17) comprend, à l'intérieur, au moins une nervure (22), qui dépasse à l'intérieur du boîtier, afin d'améliorer le contact thermique entre la bride de refroidissement (17) d'une part et le milieu de process à l'intérieur du boîtier d'autre part et
f) le milieu de process est guidé, entre l'entrée (19) et la sortie (20), par les nervures (22), autour des alésages (23) de façon à ce que, à l'intérieur du boîtier, se forme un écoulement annulaire du milieu de processus autour des alésages (23) et
g) la bride de refroidissement (17) comprend une cloison (24) qui est disposée entre l'entrée (19) et la sortie (20).

7. Installation de revêtement selon l'une des revendications précédentes, **caractérisée en ce que**
a) le deuxième composant d'installation de revêtement (1) est un pulvérisateur rotatif (1) qui émet un jet de pulvérisation (3) du produit de revêtement,
b) la chaleur dégagée par le premier composant d'installation de revêtement (12, 13) chauffe de l'air comprimé qui est introduit dans une turbine à air comprimé (5) du pulvérisateur rotatif (1) afin d'éviter la formation de condensation dans la turbine à air comprimé (5) et/ou
c) la chaleur dégagée par le premier composant d'installation de revêtement (12, 13) chauffe de l'air de guidage qui est introduit dans le pulvérisateur rotatif (1) et que le pulvérisateur rotatif (1) émet pour la formation du jet de pulvérisation (3).

8. Installation de revêtement selon la revendication 2 ou selon l'une des revendications 3 à 7, si dépendante de la revendication 2, **caractérisée en ce que**
a) le robot (6) est muni d'une base de robot (7), d'un membre de robot rotatif (8), d'un bras de robot proximal (9) et d'un bras de robot distal (10) et
b) le premier composant d'installation de revêtement (12, 13) fournissant la chaleur et/ou l'échangeur thermique (17) étant montés dans la base du robot (7) ou dans le membre rotatif du robot (8).

9. Installation de revêtement selon la revendication 2 et soit selon la revendication 3 ou selon l'une des revendications 4 à 8, si dépendantes de la revendication 3, **caractérisée en ce que**
a) le premier composant d'installation de revêtement (12, 13) fournissant la chaleur, le deuxième composant d'installation de revêtement (1, 5) et/ou l'échangeur thermique (17) étant encapsulés dans une encapsulation (16) et
b) l'encapsulation (16) étant une encapsulation anti-explosion (16), plus particulièrement une encapsulation résistante à la pression, une encapsulation anti-surpression ou une encapsulation à huile selon DIN ISO 60079 et
c) le milieu de process à chauffer est introduit dans l'encapsulation (16) puis est chauffé à l'intérieur de l'encapsulation (16) et finalement évacué hors de l'encapsulation (16) et
d) l'introduction du milieu de process dans l'encapsulation (16) et l'évacuation du milieu de process hors de l'encapsulation (16) satisfait les exigences concernant une encapsulation anti-explosion, plus particulièrement selon DIN ISO 60079.

10. Installation de revêtement selon l'une des revendications précédentes, **caractérisée en ce que**
a) le chauffage du deuxième composant d'installation de revêtement (1, 5) a lieu sans dispositif de chauffage supplémentaire exclusivement à l'aide de la chaleur dégagée par le premier composant d'installation de revêtement ou
b) pour le chauffage du deuxième composant d'installation de revêtement (1, 5), est prévu en outre un dispositif de chauffage, plus particulièrement un dispositif de chauffage d'air électrique.

11. Procédé d'exploitation pour une installation de revêtement, plus particulièrement pour une installation de peinture, pour le revêtement de composants, plus particulièrement de composants de carrosseries de véhicules automobiles, avec un produit de revêtement, plus particulièrement avec une peinture, avec les étapes suivantes :
a) fonctionnement d'un premier composant d'installation de revêtement (12, 13), le premier composant d'installation de revêtement (12, 13) générant de la chaleur en tant que sous-produit,
b) fonctionnement d'un deuxième composant d'installation de revêtement (1, 5), la chaleur étant introduite dans le deuxième composant d'installation de revêtement (1, 5),
c) introduction de la chaleur dégagée par le premier composant d'installation de revêtement (12, 13) dans le deuxième composant d'installation de revêtement (1, 5) pour le chauffage du deuxième composant d'installation de revêtement (1, 5), **caractérisé en ce que**
d) le premier composant d'installation de revêtement (12, 13) fournissant la chaleur est un entraînement de robot d'un robot (6) de l'installation de revêtement ou une partie d'un entraînement de robot, plus particulièrement d'un robot de peinture (6) ou d'un robot de manipulation de l'installation de revêtement.
